Europäisches Patentamt

**European Patent Office**

**Office européen des brevets**

(11) Numéro de publication: **0 227 558**

**A1**

(12) # DEMANDE DE BREVET EUROPEEN

(21) Numéro de dépôt: **86420270.0**

(22) Date de dépôt: **04.11.86**

(51) Int. Cl.⁴: **F 02 N 15/06**
**H 02 K 23/44**

(30) Priorité: **06.11.85 FR 8516625**

(43) Date de publication de la demande:
**01.07.87 Bulletin 87/27**

(84) Etats contractants désignés:
**DE ES FR IT**

(71) Demandeur: **Société de PARIS et du RHONE**
**36, avenue Jean Mermoz**
**F-69008 Lyon(FR)**

(72) Inventeur: **Sadier, Jacques**
**123, rue Duguesclin**
**F-69006 Lyon(FR)**

(72) Inventeur: **Mazzorana, Alfred Bruno**
**12, rue Fernand Léger**
**F-69002 Venissieux(FR)**

(74) Mandataire: **Karmin, Roger et al,**
**Cabinet MONNIER 150, cours Lafayette**
**F-69003 Lyon(FR)**

(54) **Démarreur éléctrique pour moteur thermique à variateur de flux.**

(57) Un moyeu (15) monté à rotation par rapport au palier (2), porte des lames (16) qui s'étendent dans l'entrefer du moteur électrique. L'alésage du moyeu est pourvu d'un filetage coopérant avec celui d'un disque (12) monté à rotation libre par rapport à une douille écrou (9). Celle-ci comporte un filetage (9*d*) coopérant avec celui (4*b*) du pignon (4), tandis qu'elle est encore munie de cannelures droites internes (9*a*) en prise avec des cannelures (4*c*) ménagées sur l'arbre (5) de l'induit (6). Des goujons (14) sont prévus pour maintenir le disque angulairement fixe.

*Fig. 1*

EP 0 227 558 A1

On sait que lors du lancement d'un moteur thermique par un démarreur électrique, le moteur de celui-ci doit fournir un couple important pendant les phases de compression tandis que pendant celles de détente, la vitesse angulaire du moteur thermique augmente sans qu'il soit besoin de lui fournir un couple notable. Dans ces conditions, on assiste fréquemment à un décollement des dents du pignon du lanceur du démarreur par rapport à celle de la grande couronne du moteur thermique, justement pendant les phases de détente.

Les perfectionnements qui font l'objet de la présente invention visent à permettre d'associer à un démarreur électrique un dispositif permettant d'adapter sa puissance à celle demandée par le récepteur à entraîner.

A cet effet, le dispositif suivant l'invention est pourvu de moyens de diminuer le flux émis par l'inducteur en vue d'augmenter la vitesse de l'induit du moteur électrique, donc celle du pignon du lanceur, après le passage de chaque compression des cylindres du moteur thermique.

Les moyens de diminuer le flux sont constitués par des éléments amenés en position au moment opportun en vue d'augmenter l'entrefer et/ou de dériver le flux afin que son trajet soit au moins partiellement dérivé entre deux pôles successifs de polarité inverse de l'inducteur.

Suivant une variante, on se contente de dériver le flux sans augmenter l'entrefer en vue de provoquer une augmentation de vitesse de l'induit du moteur du démarreur électrique, cette diminution de flux s'effectuant en amenant des éléments au voisinage des pôles voisins de l'inducteur.

Le dessin annexé, donné à titre d'exemple permettra de mieux comprendre l'invention, les caractéristiques qu'elle présente et les avantages qu'elle est susceptible de procurer :

Fig. 1 est une coupe transversale partielle d'un démarreur électrique pourvu des perfectionnements suivant l'invention.

Fig. 2 en est une coupe transversale au niveau de l'induit.

Fig. 3 et 4 sont des vues semblables à celles de fig. 1 et 2, mais illustrant le dispositif suivant l'invention à sa position donnant le couple maximal au moteur.

Fig. 5 est une vue semblable à celles de fig. 1 et 3, mais illustrant une variante.

Fig. 6 et 7 sont des vues partielles montrant un troisième mode d'exécution du dispositif suivant l'invention.

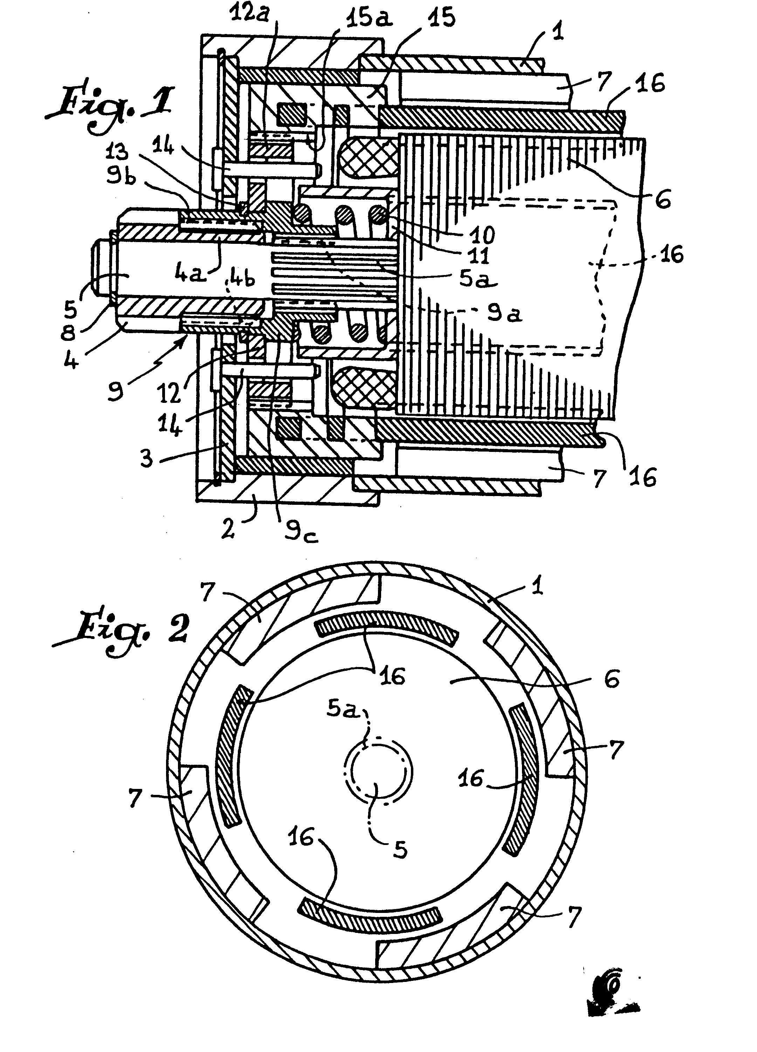

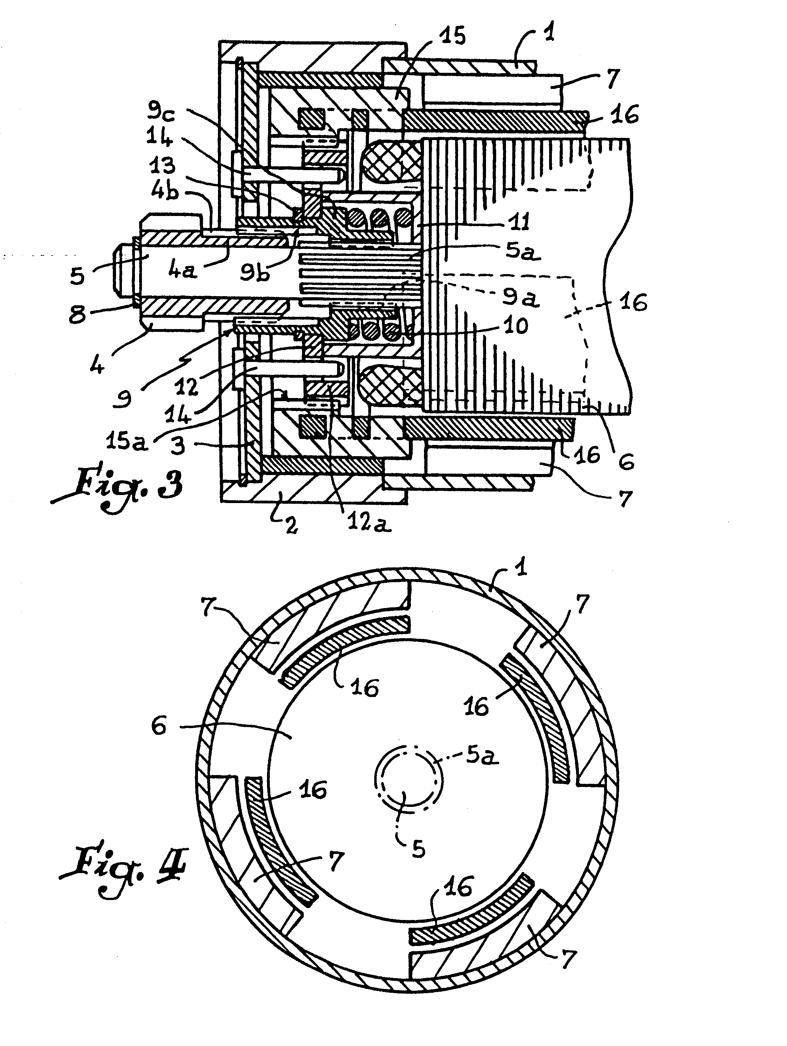

Le démarreur illustré en fig. 1, 3 et 5 comprend une carcasse magnétique 1, dont l'une des extrémités est associée à un palier 2 comportant un fond 3 pourvu d'un alésage central à travers lequel passe un pignon 4 d'attaque d'un réducteur non représenté. Ce pignon est monté à rotation sur l'arbre 5 de l'induit 6.

A l'intérieur de la carcasse magnétique 1, on a disposé des pôles 7 qui successivement sont de polarité inverse en vue de constituer l'inducteur du moteur électrique du démarreur. Ces pôles sont réalisés sous la forme d'aimants collés ou fixés par tout autre moyen à la carcasse. On observe que le diamètre du cylindre imaginaire passant par les faces internes des aimants est nettement plus important que celui de l'induit, de telle sorte qu'entre les pôles 7 et ce dernier, il existe un entrefer de dimensions nettement supérieures à celui qu'on trouve normalement dans de tels moteurs électriques.

L'arbre 5 de l'induit 6 comporte près de ce dernier des cannelures longitudinales 5a, tandis que le reste de l'arbre est lisse. Le pignon 4 tourne librement sur ladite partie lisse et il est arrêté longitudinalement par un circlips 8. Le pignon 4 est pourvu d'une queue 4a dont la périphérie porte un filetage 4b. Une douille-écrou 9 entoure la partie cannelée 5a de l'arbre 5 et le filetage 4b du pignon 4, de sorte qu'elle même est pourvue d'une part de cannelures longitudinales 9a et d'un filetage 9b qui sont respectivement en prise avec les cannelures 5a et avec le filetage 4b précité. La douille-écrou 9 comporte un épaulement 9c contre lequel repose l'une des extrémités d'un ressort de compression 10 dont l'extrémité opposée est en appui contre une butée fixe 11. L'autre face de l'épaulement 9c constitue une butée pour un disque 12 retenu contre .adite butée par un circlips 13. Le disque est monté à rotation libre par rapport à la douille-écrou 9, mais il est retenu angulairement par rapport au fond 3 au moyen de plusieurs goujons 14 et il est centré sur la douille 9. La périphérie du disque porte une jante 12a munie d'un filetage extérieur coopérant avec celui d'un moyeu tubulaire 15 établi en une matière non magnétique qui supporte un nombre de lames axiales 16 identique à celui des pôles 7. Le moyeu 15 est préférablement établi en un alliage d'aluminium surmoulé sur les lames 16. Il est en outre monté à rotation libre dans le palier 2. Les lames 16 sont courbes de manière à pouvoir s'engager avec jeu fonctionnel dans l'entrefer, c'est-à-dire entre l'induit 6 et les pôles 7. Le jeu représenté sur le dessin a été volontairement exagéré, mais il est de l'ordre de quelques dixièmes de millimètres seulement.

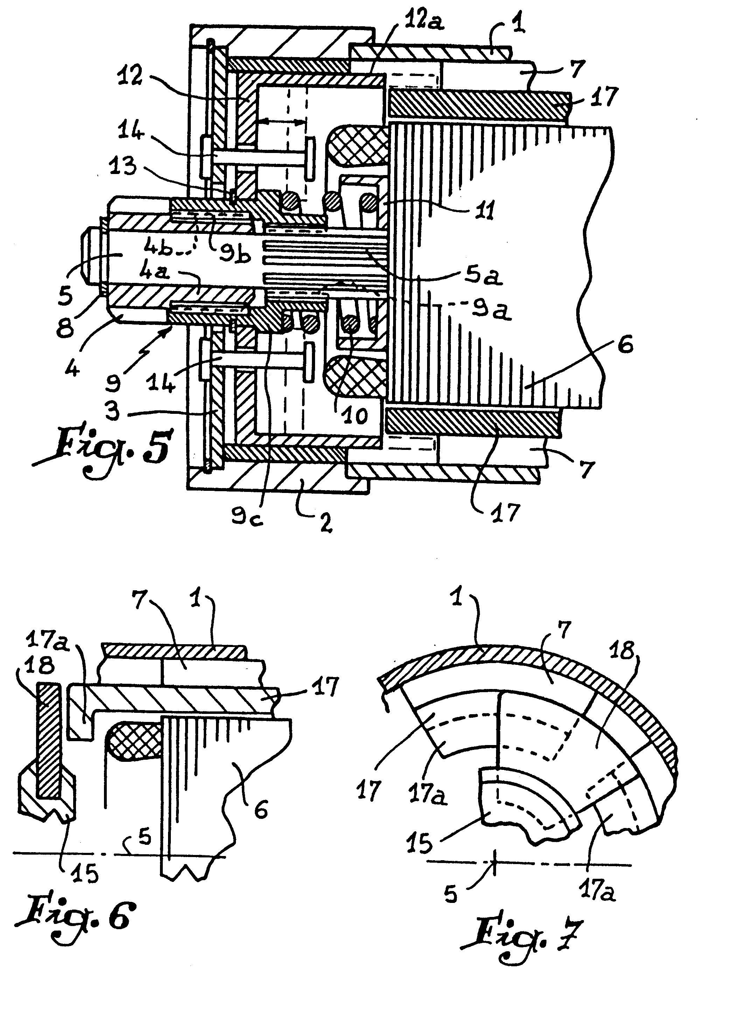

Au repos, les lames occupent la position illustrée en fig. 2, de telle sorte que d'une part elles créent un entrefer très important et que d'autre part elles provoquent une certaine dérivation du flux entre deux pôles successifs, comme cela ressort bien en fig. 2. Si l'on alimente l'induit, celui-ci va se mettre en rotation avec un couple et une vitesse angulaire déterminés. Si le pignon 4 doit transmettre un couple important, il va produire le recul de la douille-écrou 9 à l'encontre de la réaction du ressort 10, de telle sorte que le disque 12 recule lui aussi. Comme sa périphérie est filetée et que le filetage coopère avec un autre filetage ménagé dans l'alésage central 15a du moyeu 15, celui-ci tourne légèrement pour occuper la place illustrée en fig. 4, dans laquelle les lames 16 se trouvent exactement en vis-à-vis des pôles 7, de telle sorte que le flux augmente de même que le couple. Lorsque les

4 0227558

lames sont exactement en position illustrée en fig. 2, le moteur électrique fournit son couple maximal.

Comme on l'a expliqué plus haut, au moment de la détente dans les cylindres du moteur thermique, le récepteur demande moins de puissance, de sorte que le ressort 10 se détend pour revenir à la position de fig. 1, c'est-à-dire que le disque 12 se déplace longitudinalement en provoquant la rotation des lames 16 qui reviennent à la position de fig. 2. Le flux est dérivé entre deux pôles successifs de polarité différente et l'entrefer croît, de telle sorte que la vitesse d'induit augmente, si bien que le pignon 4 peut accompagner le récepteur en fonction de la puissance demandée par celui-ci.

Dans la variante de fig. 5, chaque pôle 7 est associé à une semelle 17 qui le prolonge longitudinalement, le disque 12 et sa jante 12a forment une cloche qui se déplace axialement comme expliqué plus haut, de telle sorte qu'elle vient entourer les prolongements des semelles 17 au-delà des pôles 7 lorsque le couple résistant diminue. Ainsi, suivant ce mode d'exécution, l'augmentation de la vitesse de l'induit n'est provoquée que par une dérivation du flux.

Une telle dérivation peut être aussi obtenue par des secteurs 18 ménagés sur la périphérie du moyeu 15 et qui viennent en vis-à-vis de l'extrémité recourbée 17a des semelles 17 des pôles 7. Ainsi, la rotation du moyeu 15, lorsque le couple résistant diminue, entraîne une dérivation du flux entre deux pôles 7 successifs.

**0227558**

Revendications

1. Démarreur électrique pour moteur thermique du genre comportant un moteur comprenant un induit (6) destiné à tourner à l'intérieur d'un inducteur (1-7), caractérisé en ce qu'il est pourvu de moyens (16, 12a, 17, 18) de diminuer le flux émis par l'inducteur en vue d'augmenter la vitesse de l'induit (6) donc celle du pignon (4) d'attaque d'un récepteur après le passage de chaque compression des cylindres du moteur thermique.

2. Démarreur électrique suivant la revendication 1, caractérisé en ce que les moyens de diminuer le flux sont constitués par des éléments (16) amenés en position au moment opportun en vue d'augmenter l'entrefer et de dériver le flux, afin que son trajet soit au moins partiellement dérivé entre deux pôles successifs (7) de polarité inverse de l'inducteur.

3. Démarreur électrique suivant la revendication 1, caractérisé en ce que les moyens de diminuer le flux sont constitués par des éléments (12a, 18) amenés au voisinage des pôles (7) de l'inducteur afin que le trajet du flux soit dérivé entre deux pôles successifs (7) de polarité inverse de l'inducteur.

4. Démarreur électrique suivant la revendication 2, caractérisé en ce que les éléments sont des lames courbes (16) en matière magnétique insérées dans l'entrefer existant entre l'inducteur et l'induit, ces lames (16) étant solidaires d'un moyeu (15) en matière amagnétique qui est en relation mécanique avec un mécanisme (5, 9, 12) susceptible d'entraîner sa rotation lorsque le couple résistant du moteur thermique diminue.

5. Démarreur électrique suivant la revendication 4, caractérisé en ce que l'alésage du moyeu (15) est pourvu d'un filetage coopérant avec celui d'un disque (12) monté à rotation libre par rapport à une douille-écrou (9) dont le filetage (9b) coopère avec celui (4b) du pignon (4), tandis qu'elle est encore munie de cannelures droites internes (9a) en prise avec des cannelures (5a) ménagées sur l'arbre (5) de l'induit (6), des moyens (14) étant prévus pour maintenir le disque angulairement fixe.

6. Démarreur électrique suivant la revendication 3, caractérisé en ce que le disque (12) constitue une cloche qui subit une translation axiale quand le couple résistant du moteur thermique diminue, afin de coiffer une partie au moins des semelles (17) prolongeant chaque pôle (7).

7. Démarreur électrique suivant la revendication 3, caractérisé en ce que le moyeu (15) porte des secteurs (18) disposés devant des semelles (17) prolongeant chaque pôle (7) et qui tournent pour dériver le flux lorsque le couple résistant du moteur thermique diminue.

0227558

**Fig. 1**

12a 15a 15 1 7 16
13 14 6
9b 10 11 16
4a 4b 5a
5 9a
8
4
9 12
14
3
2 9c

**Fig. 2**

7 1
16 6
5a
7 7
16
7 16 16
16 5
7

0227558

Fig. 3

Fig. 4

Fig. 5

Fig. 6

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 145 453 (F. PORSCHE) * Page 2, lignes 84-101; figure 3 * | 1,2 | F 02 N 15/06 H 02 K 23/44 |
| A | DE-C- 148 716 (E. JAVAUX et al.) * Page 2, lignes 6-28; figure 6 * | 1,2 | |
| A | GB-A-1 523 467 (THE PLESSEY CO., LTD) * Page 1, lignes 9-13 * | 1 | |
| A | EP-A-0 008 049 (SIEMENS AG) * Page 7, lignes 5-28; figures 5,6; page 9, ligne 33 - page 10, ligne 1; figure 14 * | 2-4 | |
| A | DE-A-2 429 886 (J.-D. ALTENDORF) | | DOMAINES TECHNIQUES RECHERCHES (Int. Cl.4) F 02 N H 02 K |

Le présent rapport de recherche a été établi pour toutes les revendications

| Lieu de la recherche | Date d'achèvement de la recherche | Examinateur |
|---|---|---|
| LA HAYE | 16-02-1987 | BIJN E.A. |